# EUROPEAN PATENT SPECIFICATION

(11) **EP 0 555 568 B1**
(45) Date of publication and mention of the grant of the patent: **05.06.1996**
(21) Application number: 92301089.6
(22) Date of filing: 10.02.1992
(51) Int. Cl.: B29C 67/20, B29B 17/00

(54) **Process for making a foam material**
Verfahren zur Herstellung eines Schaumkunststoffes
Procédé de fabrication d'une mousse

(43) Date of publication of application: 18.08.1993
(73) Proprietor: Chang, Kun-Huang, Tanglo Shiang, Miao Li Hsien (TW)
(72) Inventor: Chang, Kun-Huang, Tanglo Shiang, Miao Li Hsien (TW)
(74) Representative: Jones, Michael Raymond

(56) References cited:
- GB-A- 1 183 371
- GB-A- 2 116 572
- US-A- 3 452 122
- US-A- 4 591 469
- US-A- 4 666 646
- DATABASE WPIL Week 8636, Derwent Publications Ltd., London, GB; AN 81 54262D; & JP B 61 034737 (ORIENTAL METAL SEIZ KK) 09 August 1986.

## Description

This relates to a process for making a foam material, and more particularly to a process for making useful foam material from waste foam material.

US-3452122-A discloses a process for making a foam material by bonding together particles of comminuted previously formed foam material and a foamable polyurethane resin composition. The foam material made by means of such a process is provided with superior qualities of high density and high air permeability by virtue of the facts that the cavities of particles of comminuted foam material are filled with the new foam material and that the new foam material penetrates into the particles of comminuted foam material. However, the foam material made by the disclosed process is defective in that it is not provided with the quality of strong tensile strength, because the foamable polyurethane resin composition was found to be incapable of penetrating completely into the particles of comminuted foam material. Therefore, an improved process intended to provide a solution to the problem described above was disclosed in US-4666646-A. According to this process, the particles of comminuted previously formed foam material are dried before they are mixed with the foamable polyurethane resin composition. As a result, the foam material so produced is found to have a greater tensile strength as compared with the foam material made by the first disclosed process mentioned above. It was found that the dried particles permit a relatively greater quantity of foamable polyurethane resin composition to penetrate thereinto. However, this improved process is by no means entirely satisfactory; moreover, it is a time-consuming process. The preamble of the following statement of invention is based on US-3452122-A.

According to the present invention, there is provided a process for making a foam material, comprising
(a) comminuting a previously formed foam material into particles;
(b) drying the particles to obtain dried particles; and
(c) impregnating the dried particles with a first foaming reaction solution to obtain first impregnated particles; characterised by the additional steps of:-
(d) rolling and pressing the first impregnated particles so as to obtain rolled particles;
(e) mixing the rolled particles with a second foaming reaction solution so as to obtain second impregnated particles; and
(f) subjecting the second impregnated particles to steam to facilitate the foaming reaction within the second impregnated particles to take place.

The dried particles may be impregnated with the first foaming reaction solution at the same time as the dried particles are rolled and pressed.

The dried particles may be impregnated with the first foaming reaction solution coated on one of two rolling wheels positioned in such a manner that there is a predetermined clearance located therebetween to effecting the rolling and pressing.

The process of the present invention enables the foamable polyurethane resin composition to penetrate effectively and thoroughly into the particles of comminuted previously formed foam material.

Moreover, by virtue of the present invention, it is possible to accelerate the reaction process of foaming and forming.

One of the first foaming reaction solution and the second foaming reaction solution may comprise a polyol, a catalyst and additives, and the other may comprise a predetermined quantity of a diisocyanate.

In a preferred embodiment of the process of the present invention the first foaming reaction solution is made up of polyol, catalyst and additives; and the second foaming reaction solution contains a predetermined quantity of diisocyanate.

The rolling and pressing of the treated particles obtained in step (c) may occur subsequent to or simultaneously with step (c).

The present invention is notable in that it involves the impregnating of particles with the first foaming reaction solution and the rolling of the impregnated particles, enabling the second foaming reaction solution to penetrate thoroughly into the particles. The foam material so produced is provided with excellent physical properties.

The present invention is also notable in that it involves the impregnating of particles with the first and the second foaming reaction solutions and the subsequent transfer of the impregnated particles to the foaming area provided with steam to enable the foaming reaction to accelerate.

For a better understanding of the present invention, reference will now be made, by way of example, to the accompanying drawings, in which:
Figure 1 shows a flow chart of one embodiment of the process of the present invention; and
Figure 2 shows a schematic view of one embodiment of apparatus capable of carrying out part of the process of the present invention.

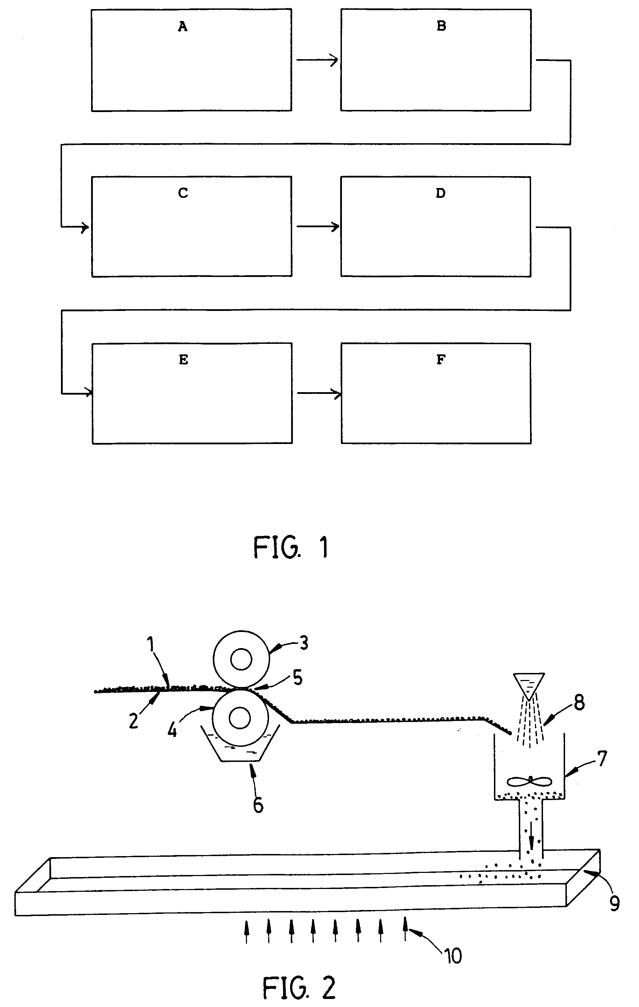

In the embodiment shown in Figures 1, a first step A involves comminuting a previously formed foam material. This is followed by a second step B which involves drying the comminuted particles. this is followed by a third step C which involves impregnating the dried particles with a first foaming reaction solution. This is followed by a fourth step D which involves rolling and pressing of the particles. This is followed by a fifth step E which involves impregnating the particles with a second foaming reaction solution. This is followed by a sixth step F which involves transferring the impregnated particles to a forming area where foaming reaction of the impregnated particles takes place.

With regard to steps A and B of Figure 1, conveniently the previously formed foam material is comminuted into particles having a diameter under 3mm. Such comminuted particles are then dried in an oven for a predetermined period of time under a temperature of the order of 150 degrees Celsius. The length of time and the degree of temperature required for the drying step are dependent on the quantity of particles intended to be dried.

With regard to steps C to F of Figure 1, reference is now made to the apparatus of Figure 2 where the following steps are carried out. The dried particles 1 from step B are transported via a conveyor 2 to a nip or narrow clearance 5 located between upper and lower rolling wheels 3 and 4. The lower rolling wheel 4 is partially submerged in a first foaming reaction solution, which is made up of a polyol, a catalyst and additives in a predetermined ratio and is contained in a solution tank 6. When upper and lower rolling wheels 3 and 4 rotate in relation to each other, the particles 1 passing through the narrow clearance 5 are impregnated with the first foaming reaction solution coated on the surface of the lower rolling wheel 4. Moreover, the particles 1 located at the narrow clearance 5 are subjected to rolling pressures exerting thereon respectively by upper and lower rolling wheels 3 and 4 so as to facilitate the first foaming reaction solution to penetrate effectively into the pressed particles 1.

The impregnated particles 1 described above are carried away by another conveyor and subsequently introduced into a mixer 7 along with a second foaming reaction solution 8 made up of TDI (tolylene diisocyanate) and 60% of polyol by weight, which causes the second foaming reaction solution to penetrate the particles.

The particles 1 impregnated with the first and the second foaming reaction solutions are finally transferred to a foaming tank 9 provided at the bottom thereof with a steam-generating device. The steam 10 generated in the foaming tank 9 is used to accelerate the foaming reaction of the impregnated particles 1.

It is apparent that the particles 1 have been impregnated thoroughly with the first foaming reaction solution before they are subjected to impregnation with the second foaming reaction solution. As a result, the newly-formed foam material is provided with better tensile strength, air permeability and other properties.

## Claims

1. A process for making a foam material, comprising
(a) comminuting a previously formed foam material into particles;
(b) drying the particles to obtain dried particles; and
(c) impregnating the dried particles with a first foaming reaction solution to obtain first impregnated particles; characterised by the additional steps of:
(d) rolling and pressing the first impregnated particles so as to obtain rolled particles;
(e) mixing the rolled particles with a second foaming reaction solution so as to obtain second impregnated particles; and
(f) subjecting the second impregnated particles to steam to facilitate the foaming reaction within the second impregnated particles to take place.

2. A process according to claim 1, wherein the dried particles are impregnated with the first foaming reaction solution at the same time as the dried particles are rolled and pressed.

3. A process according to claim 2, wherein the dried particles are impregnated with the first foaming reaction solution coated on one of two rolling wheels positioned in such a matter that there is a predetermined clearance located therebetween to effecting the rolling and pressing.

4. A process according to claim 1, 2 or 3, wherein one of the first foaming reaction solution and the second foaming reaction solution may comprise a polyol, a catalyst and additives, and the other may comprise a predetermined quantity of a diisocyanate.

5. A process according to any preceding claim, wherein the first foaming reaction solution is made up of a polyol, a catalyst and additives; and wherein the second foaming reaction solution contains a predetermined quantity of a diisocyanate.

6. A process according to claim 5, wherein step (d) is effected subsequent to or simultaneously with step (c).

## Patentansprüche

1. Verfahren zur Herstellung eines Schaummaterials, umfassend
(a) ein Zerkleinern eines früher hergestellten Schaummaterials zu Teilchen;
(b) ein Trocknen der Teilchen, um trocknene Teilchen zu bekommen; und
(c) ein Imprägnieren der getrockneten Teilchen mit einer ersten Schaumreaktionslösung, um erste imprägnierte Teilchen zu erhalten,
gekennzeichnet durch die Schritte:
(d) Walzen und Pressen der ersten imprägnierten Teilchen, um gewalzte Teilchen zu bekommen,
(e) Mischen der gewalzten Teilchen mit einer zweiten Schaumreaktionslösung, so daß zweite imprägnierte Teilchen erhalten werden; und
(f) Unterwerfen der zweiten imprägnierten Teilchen einem Dampf, damit die Schaumreaktion innerhalb der zweiten imprägnierten Partikel leichter erfolgen kann.

2. Verfahren nach Anspruch 1, wobei die getrockneten Teilchen, zugleich wie sie gewalzt und gepreßt werden, mit der ersten schaumbildenden Reaktionslösung imprägniert werden.

3. Verfahren nach Anspruch 2, wobei die getrockneten Teilchen imprägniert werden mit der ersten schaumbildenden Reaktionslösung, welche auf eine von zwei sich drehenden Rädern aufgebracht ist in einer Weise, daß da ein vorgegebener Spalt dazwischen ist, um das Walzen und Pressen zu bewirken.

4. Verfahren nach Anspruch 1, 2 oder 3, wobei entweder die erste oder die zweite Schaumreaktionslösung ein Polyol, einen Katalysator und Zusatzstoffe enthält und die jeweils andere Lösung eine vorgegebene Menge eines Diisocyanats.

5. Verfahren nach einem der vorhergegehenden Ansprüche, wobei die erste Schaumreaktionslösung aus einem Polyol, einem Katalysator und Zusatzstoffen besteht; und wobei die zweite Schaumreaktionslosung eine vorbestimmte Menge eines Diisocyanats enthält.

6. Verfahren nach Anspruch 5, wobei der Schritt (d) nach oder zugleich mit dem Schritt (c) erfolgt.

## Revendications

1. Procédé de fabrication d'une mousse comprenant
(a) la réduction en particules d'une mousse préalablement formée,
(b) le séchage des particules permettant d'obtenir des particules séchées,
(c) l'imprégnation des particules séchées avec une première solution d'expansion afin d'obtenir des particules ayant subi une première imprégnation,
caractérisé en ce qu'il comporte les étapes additionelles de
(d) laminage et compression des particules ayant subi une première imprégnation de manière à obtenir des particules laminées,
(e) mélangeage des particules laminées avec une deuxième solution d'expansion afin d'obtenir des particules ayant subi une seconde imprégnation, et
(f) exposition des particules ayant subi une seconde imprégation à de la vapeur afin de faciliter l'expansion qui doit se produire à l'intérieur des particules ayant subi une seconde imprégation.

2. Procédé conforme à la revendication 1 dans lequelles particules séchées sont imprégnées avec la première solution d'expansion en même temps qu'elles sont laminées et comprimées.

3. Procédé conforme à la revendication 2 dans lequel les particules séchées sont imprégnées avec la première solution d'expansion déposée sur un des deux ou les deux cylindres positionnés de manière à maintenir entre eux un espace prédéterminée permettant le laminage et la compression.

4. Procédé conforme à la revendication 1, 2 ou 3 dans lequel une des première et deuxième solutions d'expansion peut contenir un polyol, un catalyseur et des additifs, et dans lequel l'autre solution peut contenir une quantité prédéterminée d'un diisocyanate.

5. Procédé conforme à une quelconque des revendications précédentes dans lequel la première solution d'expansion est composée d'un polyol, d'un catalyseur et d'additifs, et dans lequel la deuxième solution d'expansion contient une quantité prédéterminée d'un diisocyanate.

6. Procédé conforme à la revendication 5 dans lequel l'étape (d) est effectuée après l'étape (c) ou en même temps que celle-ci.
